# EUROPEAN PATENT APPLICATION

(11) **EP 1 137 282 A2**
(43) Date of publication of application: **26.09.2001**
(21) Application number: 01850052.0
(22) Date of filing: 22.03.2001
(51) Int. Cl.: H04N 7/16

(54) **Communication method and a system and a terminal using said method**

(30) Priority: 22.03.2000 SE 0000988
(71) Applicant: Nokia Corporation, 02150 Espoo (FI)
(72) Inventor: Johansson, Ivan, 591 60 Motala (SE)
(74) Representative: Estreen, Lars

(57) **Abstract**

A method of providing a terminal (30) connected to at least two communication networks (10,40,50,60) with information regarding services provided in said networks comprises the following steps: providing a database server (70) with a database (72); collecting information regarding services provided in said at least two communication networks in said database server (70); storing said collected information in said database (72) as service information in a uniform format; and transferring said uniform service information to said terminal (30). With the method, an overview of services provided by different digital networks is obtained. A system, a terminal and a computer program product are also provided.

## Description

### FIELD OF INVENTION

The present invention relates generally to a method and a system for providing terminals in a communication system with information. More specifically, it concerns a method and a system for providing a digital receiver with information regarding services provided in communication networks adapted to for example the DVB standard. The invention also concerns a terminal and a computer program porduct adapted for use with such system.

### BACKGROUND

A system adapted to the Digital Video Broadcasting (DVB) standard comprises several independent networks, such as terrestrial, satellite or cable networks. In such a system with more than one distribution network, network dependent information is usually distributed separately in each network. Information about provided services, such as Service Information (SI) and Program Specific Information (PSI), relevant for a first network is distributed in that first network, information relevant for a second network is distributed in that second network etc. In the above mentioned example with a service conforming to the DVB standard, information is set according to the particular standard used, such as DVB-S (satellite), DVB-C (cable) or DVB-T (terrestrial). For more information regarding the DVB standard, reference is made to the publication "Digital Television MPEG 1 MPEG 2 And principles of the DVB System", H Benoit, ISBN 0-471-23810-4, or to the DVB Home Page on the Internet: http://www.dvb.org.

However, a problem associated with information distributed over several networks is that the information seldom is completely according to a standard. There are often application specific standards adding or changing information elements compared with the agreed standard. This could for example result in that, during channel search performed by a digital receiver, many channels are found but the associated parameters sent with the channel do not match or are missing.

Another problem is the difficulty to schedule service information. One common DVB application is television broadcasting. Today, the supply of services in that field is immense and still increasing. 'Thus, it is almost impossible to get an overview of what is on TV that day or the next week. The only way to find out is to read a large number of newspapers or magazines or to check TV guide web sites on the Internet. Alternatively, a user can tune into all available networks and download guide information, if a guide mode is at all available in the user equipment. This equipment is normally a so-called Integrated Receiver Decoder (IRD), e.g., a Set Top Box (STB) etc. In the case of the satellite version of the DVB standard, DVB-S, if the user has a motor driven antenna or a DiSEqC-controlled switch with which several satellites can be tuned into, it is even more difficult to get an overview of the services available.

Yet another problem is that non-DVB transmitted channels are hard to find with a standard channel search.

The transmitted parameters may not match the actual parameters used by the receiver system.

Still yet another problem is that the amount of information that requires transmission is rather large. Thus, it is difficult and expensive to transmit all information available for all provided services to the user. In addition, especially for low-end receivers, where the memory budget is very tight, a large amount of information poses problems.

### OBJECTS OF THE INVENTION

An object of the present invention is to provide a method and a system for providing a digital receiver connected to several communication networks with information regarding services provided in the networks wherein at least some of the above mentioned problems associated with prior art are overcome.

Another object is to provide a digital receiver terminal and a computer programme adapted for receiving such information.

### SUMMARY OF THE INVENTION

The invention is based on the realisation, that information regarding services of different networks can be collected centrally in a common database in a standardised format.

According to one aspect of the invention there is provided a method as defined in claim 1. According to other aspects of the invention there are also provided a communication system as defined in claim 13, a terminal for use in such a system as defined in claim 25 and a computer program product as defined in claim 27.

With the method and the system according to the invention, the problems of providing a digital receiver connected to several communication networks with service information are eliminated or at least mitigated. Thus, with the present invention, a user is provided only with service information quickly and efficiently and in a standardised way for all networks. Furthermore, bandwidth can be utilised more efficiently as service information transmissions can take place more seldom and during low traffic.

### BRIEF DESCRIPTION OF DRAWINGS

The invention is now described, by way of example, with reference to the accompanying drawings, in which:
Fig. 1 is an overview of a communication system according to the invention,
Fig. 2 is a block diagram of a service information server according to the invention,
Fig. 3 is a flow chart illustrating the major steps when providing a terminal in the communication system of Fig. 1 with service information, and
Fig. 4 shows the mapping of information in the service information server of Fig. 2.

### DETAILED DESCRIPTION OF THE INVENTION

In the following, a detailed description of a communication system according to the invention will be described. When the term client terminal or simply terminal is used in this document, it is to be interpreted as all kinds of user terminals capable of communicating the relevant kind of information, such Set Top Boxes (STBs) or personal computer equipped with Digital Television (DTV) receiver cards.

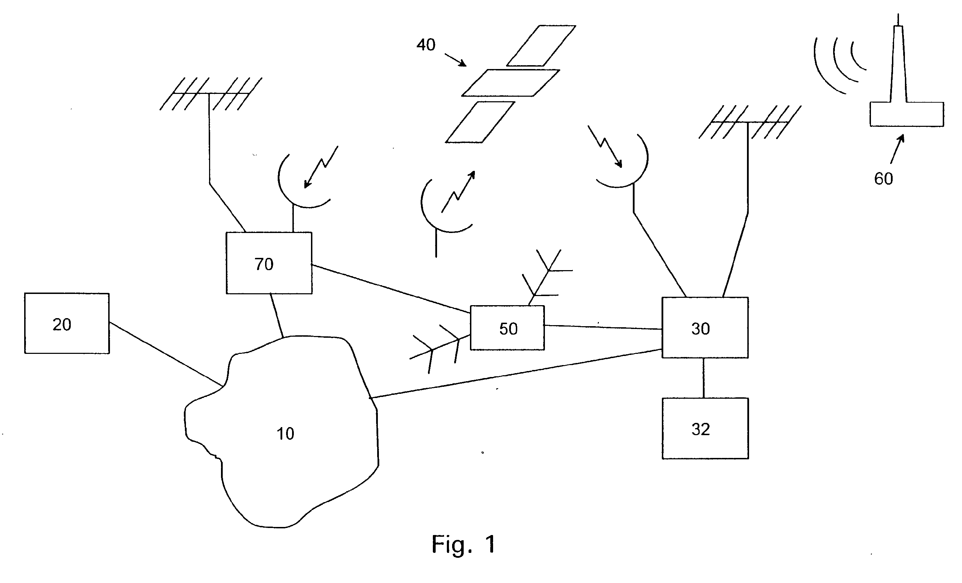

In figure 1, an overview of a digital communication system is shown. The system is preferably adapted to an MPEG2 based standard, such as the DVB standard, or ATSC and cablelabs systems wherein data in the system is used to provide information on how to tune to services and to display the information. The system is built around several networks, one of which is a data network, generally designated 10, such as the Internet. Different service providers, such as TV companies, are connected to this network through respective service provider equipment, one of which 20 is shown in figure 1. Users subscribing to the services are also connected to the network 10 through respective user equipment or client terminal, one of which 30 is shown in figure 1. The terminal 30 can be any of a personal computer with an associated modem, a separate display unit, an integrated receiver decoder (IRD) in the form of a monitor accompanying a so-called Set Top Box (STB) etc.

In addition to the data network 10, there is a satellite network, generally designated 40, a cable channel network 50 and a terrestrial network 60. Thus, the services provided by the service providers 20 can be delivered in many different ways. As an example, a digital television channel can be transmitted to a user by satellite, by a cable channel network or even by a broadcasting network or a data network, such as the Internet.

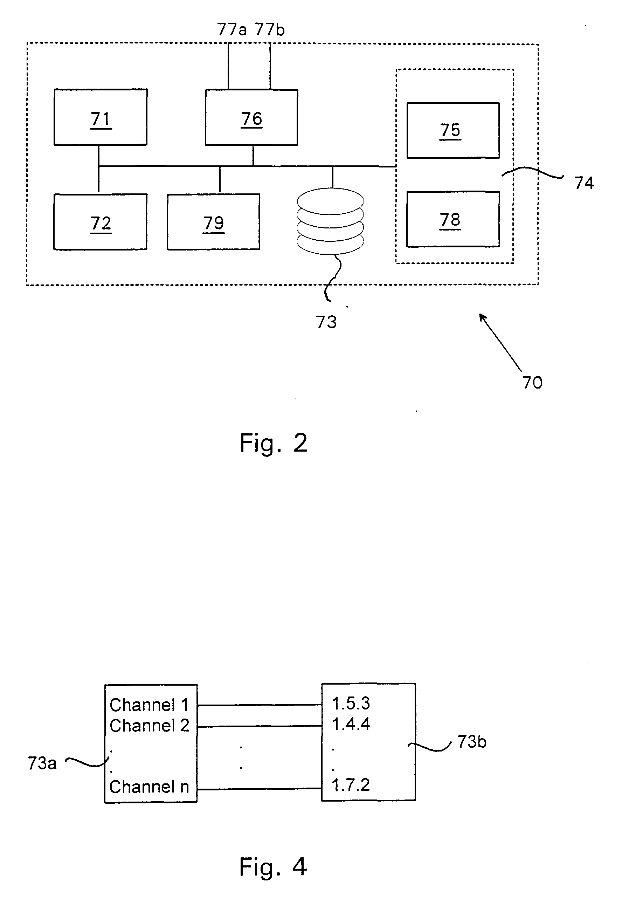

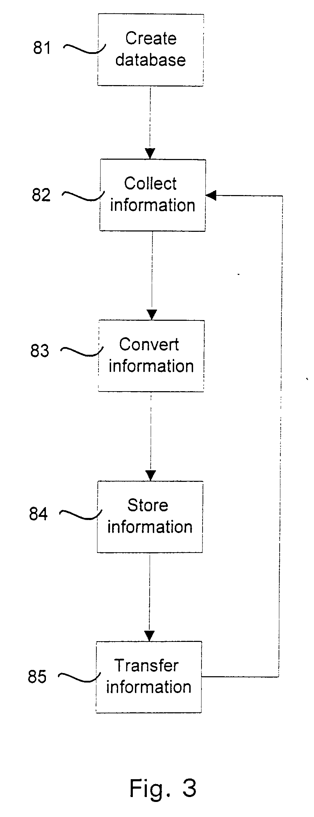

Shown in figure 1 is also a database or Service Information (SI) Server 70, also connected to the data network 10. In the following, the function of the SI Server 70 will be explained in more detail, partly with reference to figure 2. Reference is also made to figure 3, which outlines the major steps of the method used in connection with a preferred embodiment of the invention.

The SI server 70 can be any common computer equipment capable of creating and maintaining a database, step 81 in figure 3. Thus, the server 70 comprises a display 71 and a keyboard 72. It also comprises a hard disk 73 or equivalent storage medium for the storage of the database information and other data in digital form. A central processing unit 79 processes all operations in the server and is connected to the different parts of the server, as is usual.

Further, the server comprises a working storage or memory 74 for running software applications. An example of that is an information collection software application 75. The function of the information collection application is to gather information regarding the different services provided in the communication networks, step 82 in figure 3. This can be accomplished in several ways. The simplest way is to tune into the different networks and perform an automatic channel search, thus collecting information of the respective networks 10, 40, 50, and 60. This is done by means of an integrated receiver 76 provided in the SI Server and connected to the networks through one or more suitable interfaces 77a, 77b etc. The SI server 70 is thus capable of receiving information from the different networks, see figure 1.

There are alternative ways to input information. Information to be input can be collected from any source, such as newspapers, TV magazines, TV guides on the Internet etc. and input through a user interface, such as the keyboard 72. Use of Internet search engines and automated collection from other sources are also possible.

A problem mentioned above in connection with the description of prior art is that some of the transmitted channels are difficult to acquire with a standard channel search. The transmitted parameters associated with the channels do not match the actual parameters needed by a client terminal. However, in the SI Server 70, this problem can be solved by using a specialised software application 78 having knowledge of the non-standard features of the different services provided. By means of this specialised application 78, the parameters provided with the service are analysed and converted into standard parameters useable by the client terminals 30, step 83 in figure 3. These standard parameters are then stored in the database 73 for later use, step 84.

It is very important that the information in the SI Server database always is up to date. To that end, the information collection application 75 has a schedule for collecting information. As an example thereof, the integrated receiver 76 is instructed at predetermined intervals to make the above mentioned channel search and supply the information to the SI database, which is then updated if the information received during the channel search differs from that previously stored in the database.

In the following, several alternative ways of using the information stored in the SI database 73 will be described. As already mentioned, the SI Server 70 is connected to a data network 10, such as the Internet. This means that client terminals 30 can access the SI database 73 over the network 10 and collect information stored therein. In a preferred embodiment, the client terminal 30 logs into the server 70 by giving a username and password, as is usual. Associated with each username there is a user profile stored in the server. This user profile contains information regarding what kind of receiver is used by the user client terminal 30, to which networks the terminal is connected, access rights, user preferences, such as fields of interest regarding TV programmes etc. This means that when a client terminal is logged into the SI Server 70, only information elements relevant to that specific client terminal 30 have to be retrieved.

This solution with user profile has several advantages. When downloading the service information from the SI Server 70 to the client terminal 30, step 85 in figure 3, the transfer time will be kept to a minimum, thus saving costs and frustration associated with a delay. In addition, it is easier for a user using the downloaded information to get an overview thereof when only relevant information is available to him/her.

In an alternative solution, the obtained information is filtered in the client terminal 30. This has the advantage that the preferences can be changed more dynamically. In addition, in case there are several users of a specific client terminal 30, as is often the case, the different users can have different preferences, thus facilitating the use of the service information.

A combination of the two suggested solutions can also be used, i.e., the information is filtered partly on the SI Server side and partly on the client terminal side. The solution selected largely depends on the performance distribution in the system.

The information can also be pushed by the SI Server in accordance with any of the standards available, such as ATVEF standard (ATVEF - Advanced Television Enhancement Forum). The advantage of this solution is that the SI server 70 knows when service information relevant for a particular user is updated and therefore can push this information without unnecessary delay.

The timing of the information transfer is usually not critical. The service information can cover several days and channel parameters seldom change. Thus, as an alternative to sending the information to the client terminal 30 with a PPP connection, it can be broadcasted during e.g. night-time when bandwidth is cheaper. Information can be transferred to the terminal in any IP channel, PPP, ADSL, cable modem etc.

In figure 4, there is shown a preferred way of storing information regarding the different services. In the present example, the services 73a are termed "Channel 1", "Channel 2" etc. However, this is just an example. Associated with each service is a set of parameters 73b comprising information, such as frequency, forward error correction (FEC), symbol rate, packet identifier (PID) for audio, video and data etc.

Preferred embodiments of the invention have been described. It is realised that these can be varied within the scope of the appended claims. Thus, DVB compatible receivers have been shown. However, the invention is applicable to any digital communication system wherein different services are provided.

Only one network of each kind, i.e., data, satellite, cable and terrestrial, is shown in figure 1. There may of course be provided more than one network of each kind. As already mentioned, a terminal can receive information from several satellite networks, for example, possibly by means of a motor driven antenna.

## Claims

1. A method of providing a terminal (30) connected to at least two communication networks (10,40,50,60) with information regarding services provided in said networks, **characterised by** the following steps:
- providing a database server (70) with a database (72);
- collecting information regarding services provided in said at least two communication networks in said database server (70);
- storing said collected information in said database (72) as service information in a uniform format; and
- transferring said uniform service information to said terminal (30).

2. A method according to claim 1, wherein said networks (10,40,50,60) are adapted to at least one of the following standards, Digital Video Broadcasting (DVB), MPEG2, ATSC, and cablelabs.

3. A method according to claim 1 or 2, wherein said terminal is an integrated receiver decoder, preferably a set top box or a personal computer equipped with a digital television receiver card.

4. A method according to claim 1, 2 or 3, wherein the step of collecting information is effected manually.

5. A method according to claim 1, 2 or 3, wherein the step of collecting information comprises a channel search.

6. A method according to any of the preceding claims, wherein the step of collecting information comprises the additional step of converting non-uniform information collected by said server into said uniform format.

7. A method according to any of the preceding claims, wherein the step of collecting information is performed at predetermined time intervals.

8. A method according to any of the preceding claims, comprising the additional step of storing user information associated with said terminal (30), wherein said user information comprises information regarding to which networks the terminal is connected, access rights, user preferences, such as fields of interest, and wherein said step of transferring said uniform service information comprises a step of filtering the uniform information by means of said user information.

9. A method according to claim 8, wherein the step of filtering the uniform information is performed in the server (70).

10. A method according to claim 8, wherein the step of filtering the uniform information is performed in the terminal (30).

11. A method according to any of the preceding claims, wherein said step of transferring said uniform service information is initiated by the terminal (30).

12. A method according to claim 10, wherein said step of transferring said uniform service information is effected by means of a push function initiated by the server (70).

13. A communication system, comprising:
- a plurality of terminals (30) connected to at least two communication networks (10,40,50,60),
**characterised by**
- a database server (70) having a database (72) for storing digital information and being arranged to communicate with said plurality of terminals, said server comprising
- means (79) for collecting information regarding services provided in said networks,
- means (73) for storing said collected information in said database (72) as service information in a uniform format, and
- means (76) for transferring said uniform service information to said terminals (30).

14. A communication system according to claim 13, wherein said networks (10,40,50,60) are adapted to the Digital Video Broadcasting (DVB) standard.

15. A communication system according to claim 13 or 14, wherein said terminals (30) are integrated receiver decoders, preferably set top boxes.

16. A communication system according to claim 13, 14 or 15, wherein said server (70) comprises means (72) for collecting information manually.

17. A communication system according to claim 13, 14 or 15, wherein said server (70) comprises means (75,76) for collecting information by means of a channel search.

18. A communication system according to any of claims 13-17, comprising means (78) for converting non-uniform information into said uniform format.

19. A communication system according to any of claims 13-18, wherein said means (75,76) for collecting information is arranged to collect information at predetermined intervals.

20. A communication system according to any of claims 13-19, comprising memory means (73) for storing user information associated with each of said terminals (30), such as to which networks said terminals are connected, access rights, user preferences, such as fields of interest.

21. A communication system according to any of claims 13-20, wherein said server (70) comprises means for filtering the uniform information by means of said user information.

22. A communication system according to any of claims 13-20, wherein at least one of said terminals (30) comprises means for filtering the uniform information by means of said user information.

23. A communication system according to any of claims 13-22, wherein the transfer of said uniform service information is initiated by a terminal (30).

24. A communication system according to any of claims 13-22, wherein said server (70) comprises means (79) for initiating the transfer of said uniform service information by means of a push function.

25. A terminal comprising a receiver adapted for receiving digital information from at least two networks,
**characterised by**
- means for receiving information regarding services provided by said at least two networks (10, 40,50,60) in a uniform format,
- wherein said uniform service information is collected in a database server (70), stored in a database (72) in said database server in said uniform format, and transferred to said terminal from said database server.

26. A terminal according to claim 25, comprising means for filtering the uniform service information by means of user information, such as to which networks the terminal is connected, access rights, and user preferences, such as fields of interest.

27. A computer program product directly loadable into the internal memory of a computer terminal comprising a receiver adapted for receiving digital information from at least two networks,
**characterised by**
- software code portions for filtering information regarding services provided by said at least two networks (10, 40,50,60) in a uniform format, and
- software code portions for collecting said uniform service information in a database server (70), storing it in a database (72) in said database server in said uniform format, and transferring it to said terminal from said database server.
